# EUROPEAN PATENT APPLICATION

(11) **EP 4 447 210 A1**
(43) Date of publication of application: **16.10.2024**
(21) Application number: 23745923.5
(22) Date of filing: 10.01.2023
(51) Int. Cl.: H01M 50/231

(54) **PROTECTIVE PLATE FOR BATTERY PACK, BATTERY PACK, AND VEHICLE**

(30) Priority: 28.01.2022 CN 202220240991 U
(71) Applicant: BYD Company Limited, Shenzhen, Guangdong 518118 (CN)
(72) Inventor: WAN, Long, Shenzhen, Guangdong 518118 (CN); LU, Zhipei, Shenzhen, Guangdong 518118 (CN); PENG, Qingbo, Shenzhen, Guangdong 518118 (CN); TAN, Zhijia, Shenzhen, Guangdong 518118 (CN); SUN, Zenan, Shenzhen, Guangdong 518118 (CN)
(74) Representative: Dehns Germany Partnerschaft mbB
(86) International application number: PCT/CN2023/071513
(87) International publication number: WO 2023/143040

(57) **Abstract**

The present disclosure discloses a protective plate for a battery pack, a battery pack and a vehicle. The protective plate includes a first fiber-resin composite layer, a metal layer and a buffering layer laminated in sequence.

## Description

### CROSS-REFERENCE TO RELATED APPLICATIONS

The present disclosure claims priority to Chinese Patent Application No. 202220240991.0 filed on January 28, 2022 and entitled "PROTECTIVE PLATE FOR BATTERY PACK, BATTERY PACK AND VEHICLE", which is incorporated herein by reference in its entirety.

### FIELD

The present disclosure relates to the technical field of new energy, and more specifically, to a protective plate for a battery pack, a battery pack and a vehicle.

### BACKGROUND

With the increasingly high requirements for energy conservation and environmental protection, electric vehicles have made rapid development in China in recent years. Different from traditional fuel-powered vehicles, power batteries are an important component of electric vehicles. As a carrier of the power battery, the increasingly high requirements are put forward for the safety performance, mechanical performance and lightweight of a power battery housing.

At present, the battery housing is largely made of a metal material. To reduce the weight of the vehicle body, the battery housing is generally produced with an aluminum material. However, due to the low rigidity of aluminum, when stones or other sharp objects raised by new energy vehicles during traveling hit the bottom of a battery pack, the battery housing has the risk of damage, and cannot protect the battery pack well, thus leading to the failure of the battery pack and even the hazards of fire and explosion. Therefore, a protective plate is generally arranged at the bottom of the battery pack to improve the safety performance of the battery pack.

In related art, the protective plate is often prepared with steel, aluminum and other metal materials. However, the anti-corrosion process of protective plates made of metal materials is difficult, and the surface is easy to be corroded, so they have difficulties to meet the current requirements during use.

### SUMMARY

An object of the present disclosure is to provide a protective plate for a battery pack, a battery pack and a vehicle.

In a first aspect of the present disclosure, a protective plate for a battery pack is provided. The protective plate includes a first fiber-resin composite layer, a metal layer and a buffering layer laminated in sequence.

In some embodiments, the protective plate further includes a second fiber-resin composite layer, where the second fiber-resin composite layer is arranged at a side of the buffering layer facing away from the metal layer.

In some embodiments, a thickness of the first fiber-resin composite layer ranges from 0.3 mm to 1.0 mm, a thickness of the metal layer ranges from 0.6 mm to 1.2 mm, a thickness of the buffering layer ranges from 6 mm to 12 mm, and a thickness of the second fiber-resin composite layer ranges from 0.5 mm to 1.0 mm.

In some embodiments, a thickness of the protective plate ranges from 7 mm to 15 mm.

In some embodiments, a first adhesive layer is arranged between the first fiber-resin composite layer and the metal layer, where a thickness of the first adhesive layer ranges from 0.1 mm to 0.3 mm.

In some embodiments, a second adhesive layer is arranged between the metal layer and the buffering layer, where a thickness of the second adhesive layer ranges from 0.1 mm to 0.3 mm.

In some embodiments, a third adhesive layer is arranged between the buffering layer and the second fiber-resin composite layer, where a thickness of the third adhesive layer ranges from 0.1 mm to 0.3 mm.

In some embodiments, the buffering layer and the metal layer are connected by a molten component. The metal layer is provided with a connecting hole, one end of the molten component is located in the connecting hole and connected to an inner wall of the connecting hole, and the other end of the molten component is connected to the buffering layer.

In some embodiments, a recess is arranged at a side of the buffering layer and facing the metal layer, and the metal layer is located in the recess.

In some embodiments, the metal layer has a first dimension in a length direction of the protective plate, the first fiber-resin composite layer has a second dimension in the length direction of the protective plate, and the buffering layer has a third dimension in the length direction of the protective plate, where the first dimension is smaller than the second dimension, and the first dimension is smaller than the third dimension; and/or
the metal layer has a fourth dimension in a width direction of the protective plate, the first fiber-resin composite layer has a fifth dimension in the width direction of the protective plate, and the buffering layer has a sixth dimension in the width direction of the protective plate, where the fourth dimension is smaller than the fifth dimension, and the fourth dimension is smaller than the sixth dimension.

In some embodiments, the protective plate further includes a second fiber-resin composite layer, where the second fiber-resin composite layer is arranged at a side of the buffering layer facing away from the metal layer. The second fiber-resin composite layer has a seventh dimension in the length direction of the protective plate, and the seventh dimension is equal to the second dimension; and/or the second fiber-resin composite layer has an eighth dimension in the width direction of the protective plate, and the fifth dimension is equal to the eighth dimension.

In some embodiments, the second dimension is greater than or equal to the third dimension; and/or the fifth dimension is greater than or equal to the sixth dimension.

In some embodiments, the protective plate has a length dimension of Lmm. In the length direction of the protective plate 1, a first distance exists between an edge of the metal layer and an edge of the first fiber-resin composite layer, and the dimension of the first distance is L*(3% to 8%)mm; and
a second distance exists between the edge of the metal layer and an edge of the buffering layer, and the dimension of the second distance is L*(3% to 8%)mm.

In some embodiments, the protective plate has a width dimension of Wmm. In the width direction of the protective plate, a third distance exists between an edge of the metal layer and an edge of the first fiber-resin composite layer, and the dimension of the third distance is W*(2% to 12%)mm; and
a fourth distance exists between the edge of the metal layer and an edge of the buffering layer, and the dimension of the fourth distance is W*(2% to 12%)mm.

In some embodiments, the first fiber-resin composite layer includes a fiber and a resin, where the fiber is at least one of a carbon fiber, a glass fiber and an aramid fiber, and the resin is at least one of an epoxy resin, a phenolic resin, a polypropylene resin, and a nylon resin.

In some embodiments, the buffering layer has a honeycomb structure, where a hole size of the honeycomb structure ranges from 6 mm to 10 mm, and a hole wall dimension of the honeycomb structure ranges from 0.3 mm to 0.8 mm; or the buffering layer has a foam structure.

In a second aspect of the present disclosure, a battery pack is provided. The battery pack includes a tray and a protective plate according to the first aspect, where the protective plate is mounted on the tray.

In a third aspect of the present disclosure, a vehicle is provided, which includes the battery pack according to the second aspect.

One technical effect of the present disclosure is that the protective plate according to the present disclosure includes the first fiber-resin composite layer, the metal layer and the buffering layer laminated in sequence, where the metal layer is located between the first fiber-resin composite layer and the buffering layer, to avoid the corrosion of the metal layer of the protective plate.

In the protective plate of the present disclosure, the first fiber-resin composite layer and the metal layer are laminated. The plastic deformation ability of the metal layer can effectively compensate for the brittle fracture of the first fiber resin composite layer itself, thus greatly enhancing the external impact resistance of the protective plate. Moreover, the buffering layer has a good buffering and energy absorption performance. Therefore, the protective plate of the present disclosure has both impact resistance and structural rigidity, thus prolonging the service life of the protective plate.

Other features and advantages of the present disclosure will become apparent from the following detailed description of exemplary embodiments of the present disclosure with reference to the drawings.

### BRIEF DESCRIPTION OF THE DRAWINGS

Accompanying drawings that constitute a part of the specification show embodiments of the present disclosure, and are used together with the specification to explain the principle of the present disclosure.
FIG. 1 shows a schematic structural view of a battery pack according to the present disclosure.
FIG. 2 shows a schematic structural view of a battery tray and a protective plate according to the present disclosure.
FIG. 3 shows a first schematic structural view of a protective plate according to the present disclosure.
FIG. 4 shows a second schematic structural view of a protective plate according to the present disclosure.
FIG. 5 shows a schematic structural view of a protective plate according to the present disclosure.

### List of reference numerals:

1. protective plate; 11. first fiber-resin composite layer; 12. metal layer; 13. buffering layer; 14. second fiber-resin composite layer; 15. first adhesive layer; 16. second adhesive layer; 17. recess; 18. limit post; 19. honeycomb structure; 20. connecting hole;
2. battery pack; 21. tray; 22. battery core; 23. sealing cover.

### DETAILED DESCRIPTION

Various exemplary embodiments of the present disclosure are now described in detail with reference to the accompanying drawings. It is to be noted that unless otherwise specifically specified, the relative arrangement, numerical expressions, and numerical values of components and steps described in the embodiments do not limit the scope of the present disclosure.

The following descriptions of at least one exemplary embodiment are merely illustrative, and do not constitute any limitation on the present disclosure and application or use thereof in any way.

Technologies, and devices known to those of ordinary skill in related art may not be discussed in detail, but where appropriate, the techniques and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

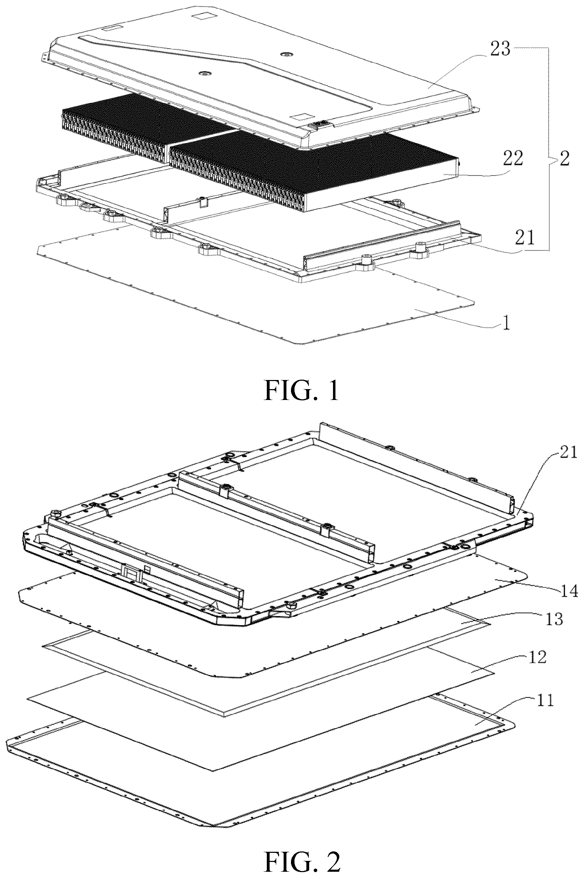

The present disclosure provides a protective plate 1 for a battery pack. As shown in FIGs. 1 to 5, the protective plate 1 includes a first fiber-resin composite layer 11, a metal layer 12 and a buffering layer 13 laminated in sequence.

In the embodiment of the present disclosure, the protective plate 1 includes the first fiber-resin composite layer 11, the metal layer 12 and the buffering layer 13, where the metal layer 12 is located between the first fiber-resin composite layer 11 and the buffering layer 13. The first fiber-resin composite layer 11 has a composite sheet structure containing a fiber and a resin material. The first fiber-resin composite layer 11 serves as a surface material of the protective plate 1, that is, the first fiber-resin composite layer 11 is an outermost layer of the protective plate 1. The first fiber-resin composite layer 11 of the present disclosure has good corrosion resistance, and can also increase the scratch and impact resistance of the surface of the metal layer 12. The first fiber-resin composite layer 11 of the present disclosure is composed of a composite material of a fiber and a resin, which ensures the strength and rigidity of the protective plate 1.

In the embodiment of the present disclosure, the first fiber-resin composite layer 11 and the metal layer 12 are laminated together. For example, the first fiber-resin composite layer 11 and the metal layer 12 may be directly laminated together, or the first fiber-resin composite layer 11 and the metal layer 12 may be laminated together with the aid of an intervening material. For example, the first fiber-resin composite layer 11 and the metal layer 12 are described to be laminated together by a first adhesive layer 15 hereinafter. The first adhesive layer 15 serves as the intervening material. In the embodiments of the present application, the plastic deformation ability of the metal layer 12 can effectively compensate for the brittle fracture of the first fiber resin composite layer 11 itself, thus greatly enhancing the external impact resistance of the protective plate 1. In addition, the first fiber-resin composite layer 11 is arranged on a surface of the metal layer 12, to avoid the phenomenon that the metal layer 12 is easily corroded. For example, the metal layer 12 can be made of steel, aluminum, and titanium alloy, etc. In some embodiments, the metal layer 12 is a steel plate.

In the embodiment of the present disclosure, the buffering layer 13 and the metal layer 12 are laminated together. For example, the buffering layer 13 and the metal layer 12 may be directly laminated together, or the buffering layer 13 and the metal layer 12 may be laminated together with the aid of an intervening material. For example, the buffering layer 13 and the metal layer 12 are described to be laminated together by a second adhesive layer 16 hereinafter. The second adhesive layer 16 serves as the intervening material. During use, when the protective plate 1 is impacted, since the buffering layer 13 has a good buffering capacity, the buffering layer 13 can absorb the force applied to the protective plate when impacted, so that the protective plate 1 has a good buffering and energy absorption performance. Particularly, the rigidity of the buffering layer 13 is less than that of the metal layer 12. That is, when the metal layer 12 and the buffering layer 13 are impacted by the same force, the deformation of the metal layer 12 is smaller. Therefore, the metal layer 12 has a greater structural strength, and thus can prevent the global deformation caused by undue deformation of the bottom of the protective plate 1, to improve the structural stability of the protective plate 1. The buffering layer 13 has a small rigidity, and can further absorb the impact energy transmitted from the metal layer 12 through its own deformation, thereby inhibiting the transmission speed of the impact energy and reducing the impact on the protective plate 1. After the protective plate 1 is impacted, the overall structural stability can be ensured, and the impact energy can be effectively absorbed, whereby the structural stability of the protective plate 1 is improved, and the service life of the protective plate 1 is prolonged. In addition, the buffering layer 13 is arranged on another surface of the metal layer 12, to avoid the phenomenon that the surface of the metal layer 12 is easily corroded.

In an embodiment, as shown in FIGs. 1 to 5, the protective plate 1 further includes a second fiber-resin composite layer 14. The second fiber-resin composite layer 14 is arranged at a side of the buffering layer 13 facing away from the metal layer 12.

In the embodiment of the present disclosure, the second fiber resin composite layer 14 is arranged on the buffering layer 13 and faces away from the metal layer 12. For example, the protective plate 1 includes the first fiber-resin composite layer 11, the metal layer 12, the buffering layer 13 and the second fiber-resin composite layer 14 laminated in sequence. In the present disclosure, the second fiber-resin composite layer 14 is additionally arranged, to further enhance the structural rigidity of the protective plate 1.

In an embodiment, both the first fiber-resin composite layer 11 and the second fiber-resin composite layer 14 include a fiber and a resin material, where the fiber material accounts for 50% to 60% by weight of the fiber-resin composite layer, and the resin material accounts for 35% to 50% by weight of the fiber-resin composite layer. In this embodiment, the fiber material and the resin material in the first fiber-resin composite layer 11 and the second fiber-resin composite layer 14 are defined, so that both the first fiber-resin composite layer 11 and the second fiber-resin composite layer 14 have the integrated characteristics of light weight, collision resistance, impact resistance and the like.

In an embodiment, as shown in FIGs. 1 to 5, a thickness of the first fiber-resin composite layer 11 ranges from 0.3 mm to 1.0 mm, a thickness of the metal layer 12 ranges from 0.6 mm to 1.2 mm, a thickness of the buffering layer 13 ranges from 6 mm to 12 mm, and a thickness of the second fiber-resin composite layer 14 ranges from 0.5 mm to 1.0 mm.

In the embodiment, the thickness of the first fiber-resin composite layer 11, the metal layer 12, the buffering layer 13 and the second fiber-resin composite layer 14 is defined, so as to reduce the thickness of the protective plate 1 as much as possible and improve the effect of lightweighting while the structural strength, rigidity and impact resistance of the protective plate 1 are met. The protective plate 1 is applicable to the battery pack 2, to reduce the overall height space of the battery pack 2.

In related art, the protective plate is a metal protective plate. To prevent the corrosion of the metal protective plate, a coating is arranged on the surface of the metal protective plate. A thickness of the coating formed on the metal surface generally ranges from 1.5 mm to 3.0 mm. In this embodiment, the first fiber-resin composite layer 11 is arranged on a surface of the metal layer 12, and a thickness of the first fiber-resin composite layer 11 ranges from 0.3 mm to 1.0 mm, so as to achieve a lightweighting design and reduce the overall thickness of the protective plate 1. For example, the thickness of the first fiber-resin composite layer 11 is 0.3 mm, 0.5 mm, 0.8 mm, or 1.0 mm.

In this embodiment, the thickness of the metal layer 12 is defined, so as to reduce the thickness of the metal layer 12 as much as possible while the structural strength of the protective plate 1 is met. For example, the thickness of the metal layer 12 is 0.6 mm, 0.8 mm, 1 mm, or 1.2 mm.

In this embodiment, the thickness of the buffering layer 13 is defined, so as to reduce the thickness of the buffering layer 13 as much as possible while the buffering performance of the protective plate 1 is met. For example, the thickness of the buffering layer 13 is 6 mm, 8 mm, 10 mm, or 12 mm.

In an embodiment, a thickness of the protective plate 1 ranges from 7 mm to 15 mm.

In the embodiment, the overall thickness of the protective plate 1 is defined, so as to ensure the rigidity and strength of the protective plate 1 and avoid the bending of the protective plate 1 when it is hit or impacted, while the lightweighting design of the protective plate is met.

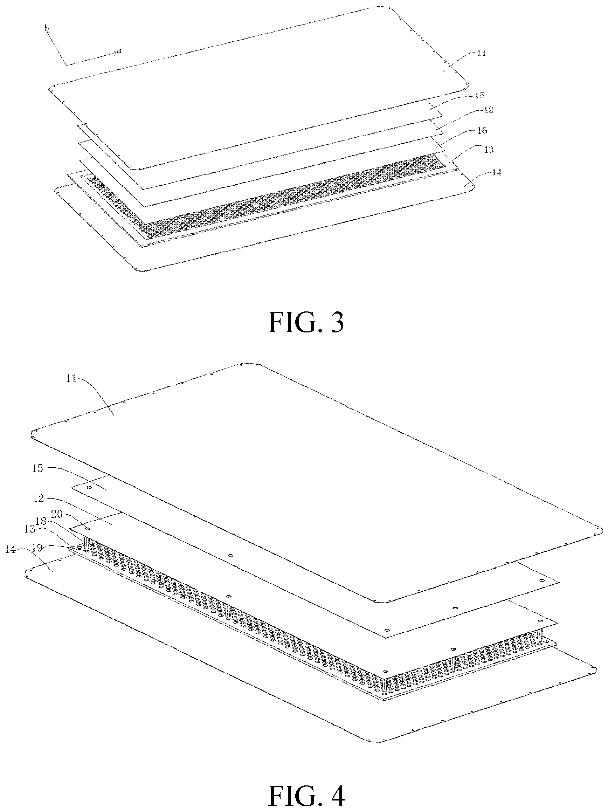

In an embodiment, as shown in FIGs. 3 to 5, a first adhesive layer 15 is arranged between the first fiber-resin composite layer 11 and the metal layer 12, and a thickness of the first adhesive layer 15 ranges from 0.1 mm to 0.3 mm.

In an embodiment, a second adhesive layer 16 is arranged between the metal layer 12 and the buffering layer 13, and a thickness of the second adhesive layer 16 ranges from 0.1 mm to 0.3 mm.

In a specific embodiment, as shown in FIG. 3, adjacent layers in the first fiber-resin composite layer 11, the metal layer 12 and the buffering layer 13, are bonded by an adhesive to form the protective plate 1. For example, the first adhesive layer 15 is arranged between the first fiber-resin composite layer 11 and the metal layer 12, and the first fiber-resin composite layer 11 and the metal layer 12 are bonded together by the first adhesive layer 15. The second adhesive layer 16 is arranged between the metal layer 12 and the buffering layer 13, and the metal layer 12 and the buffering layer 13 are bonded together by the second adhesive layer 16. The first adhesive layer 15 and the second adhesive layer 16 may be the same type of adhesive layer, or the first adhesive layer 15 and the second adhesive layer 16 may be different types of adhesive layers. For example, the first adhesive layer 15 is a hot melt adhesive film, which is melted by a heating and pressurizing means, to bond the first fiber-resin composite layer 11 and the metal layer 12 together. Alternatively, the first adhesive layer 15 is a coated adhesive layer, and the first fiber-resin composite layer 11 and the metal layer 12 are directly bonded by the coated adhesive layer. The second adhesive layer 16 is a hot melt adhesive film, which is melted by a heating and pressurizing means, to bond the buffering layer 13 and the metal layer 12 together. Alternatively, the second adhesive layer 16 is a coated adhesive layer, and the buffering layer 13 and the metal layer 12 are directly bonded by the coated adhesive layer.

To avoid excessive thickness of the protective plate 1, the thicknesses of the first adhesive layer 15 and the second adhesive layer 16 is defined. The thicknesses of the first adhesive layer 15 and the second adhesive layer 16 may be the same or different. The thickness of the first adhesive layer 15 ranges from 0.1 mm to 0.3 mm, and optionally, the thickness of the first adhesive layer 15 ranges from 0.15 mm to 0.2 mm. The thickness of the second adhesive layer 16 ranges from 0.1 mm to 0.3 mm, and optionally, the thickness of the second adhesive layer 16 ranges from 0.15 mm to 0.2 mm.

In an embodiment of the present disclosure, the connection modes between the thickness of the first fiber-resin composite layer 11, the metal layer 12 and the buffering layer 13 are defined, so as to improve the connection reliability between adjacent layers, and avoid the splitting of the protective plate 1 during use.

In an embodiment, a third adhesive layer is arranged between the buffering layer 13 and the second fiber-resin composite layer 14, and a thickness of the third adhesive layer ranges from 0.1 mm to 0.3 mm.

In the embodiment of the present disclosure, the buffering layer 13 and the second fiber-resin composite layer 14 are bonded together by the third adhesive layer (not shown). For example, the third adhesive layer is a hot melt adhesive film, which is melted by a heating and pressurizing means, to bond the second fiber-resin composite layer 14 and the buffering layer together. Alternatively, the third adhesive layer is a coated adhesive layer, and the second fiber-resin composite layer 14 and the buffering layer 13 are directly bonded by the coated adhesive layer. The thickness of the third adhesive layer ranges from 0.1 mm to 0.3 mm, and optionally, the thickness of the third adhesive layer ranges from 0.15 mm to 0.2 mm.

In an embodiment, as shown in FIG. 4, the buffering layer 13 and the metal layer 12 are connected by a molten component. The metal layer 12 is provided with a connecting hole 20, one end of the molten component is located in the connecting hole 20 and connected to an inner wall of the connecting hole 20, and the other end of the molten component is connected to the buffering layer 13. Alternatively,

a recess 17 is arranged at a side of the buffering layer 13 and facing the metal layer 12, and the metal layer 12 is located in the recess 17.

In a specific embodiment, as shown in FIG. 3, the first fiber-resin composite layer 11 and the metal layer 12 are bonded by the first adhesive layer 15. For example, the first adhesive layer 15 is a hot melt adhesive film, which is melted by a heating and pressurizing means, to bond the first fiber-resin composite layer 11 and the metal layer 12 together. Alternatively, the first fiber-resin composite layer 11 and the metal layer 12 are bonded together by a coated adhesive layer.

As shown in FIG. 4, the metal layer 12 and the buffering layer 13 are not bonded by an adhesive layer, but one or more molten components are arranged between the metal layer 12 and the buffering layer 13, and the metal layer 12 and the buffering layer 13 are connected by the molten components. For example, the molten component can be distributed along a circumferential direction of the metal layer 12 and the buffering layer 13, or the molten component is diagonally distributed between the metal layer 12 and the buffering layer 13, or the molten component is distributed in an array between the metal layer 12 and the buffering layer 13. In the embodiment, a limit post 18 arranged on the metal layer 12 and the buffering layer 13 are made in a molten state by hot pressing to form the molten component.

Particularly, the buffering layer 13 is arranged with the limit post 18, and the metal layer 12 is provided with a connecting hole 20 matched with the limit post 18. The limit post 18 is fitted in the connecting hole 20. That is, one end of the limit post 18 is fixed onto the buffering layer 13, and the other end of the limit post 18 is fixed to the metal layer 12 by the connecting hole 20. The limit post 18 is melted by a hot pressing process to form a molten component. The metal layer 12 and the buffering layer 13 are connected by the molten component (that is, molten limit post 18). One end of the molten component is fitted in the connecting hole 20, to fix the one end of the molten component to the metal layer 12, and the other end of the molten component is fixed onto the buffering layer 13, thereby improving the connection strength between the metal layer 12 and the buffering layer 13. For example, the limit post 18 is a plastic post. For example, the buffering layer 13 has a honeycomb structure. As shown in FIG. 4, one end of the limit post 18 is fixed in a hole of the honeycomb structure.

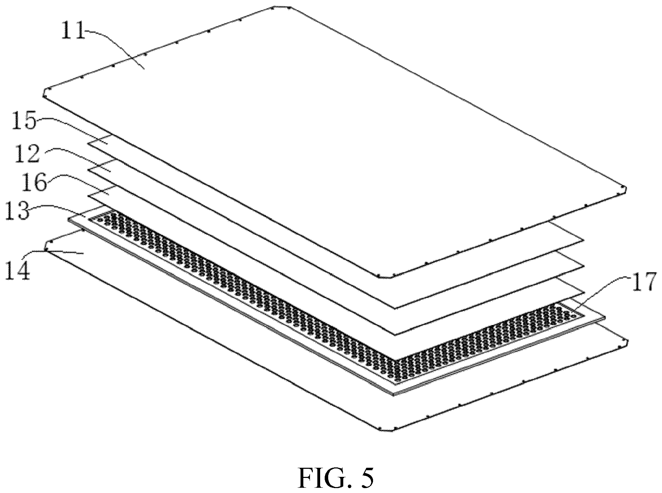

In another specific embodiment, as shown in FIG. 5, the first adhesive layer 15 is arranged between the first fiber-resin composite layer 11 and the metal layer 12, and the first fiber-resin composite layer 11 and the metal layer 12 are bonded together by the first adhesive layer 15. The second adhesive layer 16 is arranged between the metal layer 12 and the buffering layer 13, and the metal layer 12 and the buffering layer 13 are bonded together by the second adhesive layer 16. In the embodiment, to further improve the connection strength between the metal layer 12 and the buffering layer 13, the buffering layer 13 is arranged with a recess 17, and the metal layer 12 is located in the recess 17. When the metal layer 12 is embedded in the recess 17, the metal layer 12 and the buffering layer 13 are initially fixed through the recess 17. After the initial fixing, the second adhesive layer 16 arranged between the metal layer 12 and the buffering layer 13 is melted by a heating and pressurizing means, to bond the metal layer 12 and the buffering layer 13 together. This further improves the connection strength between the metal layer 12 and the buffering layer 13 are bonded together.

In an embodiment, as shown in FIGs. 3 to 5, the metal layer 12 has a first dimension in a length direction of the protective plate 1, the first fiber-resin composite layer 11 has a second dimension in the length direction of the protective plate 1, and the buffering layer 13 has a third dimension in the length direction of the protective plate 1, where the first dimension is smaller than the second dimension, and the first dimension is smaller than the third dimension; and/or
the metal layer 12 has a fourth dimension in a width direction of the protective plate 1, the first fiber-resin composite layer 11 has a fifth dimension in the width direction of the protective plate 1, and the buffering layer 13 has a sixth dimension in the width direction of the protective plate 1, where the fourth dimension is smaller than the fifth dimension, and the fourth dimension is smaller than the sixth dimension.

In the embodiment, the metal layer 12 is located between the first fiber-resin composite layer 11 and the buffering layer 13, and the length dimension and the width dimension of the metal layer 12 are defined, to avoid the corrosion of the metal layer 12.

Particularly, in the length direction of the protective plate 1 (as shown in FIG. 3, the direction indicated by arrow a), the length dimension of the metal layer 12 is smaller than the length dimension of the first fiber-resin composite layer 11, and the length dimension of the metal layer 12 is smaller than the length dimension of the buffering layer 13.

In the length direction of the protective plate 1 (as shown in FIG. 3, the direction indicated by arrow b), the width dimension of the metal layer12 is smaller than the width dimension of the first fiber-resin composite layer 11, and the width dimension of the metal layer 12 is smaller than the width dimension of the buffering layer 13. That is, the surface area of the metal layer 12 is smaller than the surface area of the first fiber-resin composite layer 11, and the surface area of the metal layer 12 is smaller than the surface area of the buffering layer 13.

Since the surface area of the metal layer 12 is smaller than the surface area of the first fiber-resin composite layer 11 and the surface area of the metal layer 12 is smaller than the surface area of the buffering layer 13, In the forming process of the protective plate 1, a portion of the first fiber-resin composite layer 11 is laminated with the metal layer 12, and the other portion of the first fiber-resin composite layer 11 is laminated with the buffering layer 13, so that the metal layer 12 is located between the first fiber-resin composite layer 11 and the buffering layer 13, to avoid the surface corrosion of the metal layer 12.

In an embodiment, the second fiber-resin composite layer 14 has a seventh dimension in the length direction of the protective plate 1, and the seventh dimension is equal to the second dimension; and/or the second fiber-resin composite layer 14 having an eighth dimension in the width direction of the protective plate 1, and the fifth dimension is equal to the eighth dimension.

In the embodiment of the present disclosure, if the length dimension of the buffering layer 13 is smaller than the length dimension of the first fiber-resin composite layer 11, the width dimension of the buffering layer 13 is smaller than the width dimension of the first fiber-resin composite layer 11, the length dimension of the second fiber-resin composite layer 14 is equal to the length dimension of the first fiber-resin composite layer 11, and the width dimension of the second fiber-resin composite layer 14 is equal to the width dimension of the first fiber-resin composite layer 11, then a portion of the first fiber-resin composite layer 11 will be laminated with the metal layer 12, and the other portion of the first fiber-resin composite layer 11 will be laminated with the second fiber-resin composite layer 14, such that the metal layer 12 is wrapped, to avoids the corrosion of the metal layer 12.

Further, the second dimension is greater than or equal to the third dimension; and/or the fifth dimension is greater than or equal to the sixth dimension.

In this embodiment, the relationship between the length dimension of the first fiber-resin composite layer 11 and the length dimension of the buffering layer 13 is defined, and the relationship between the width dimension of the first fiber-resin composite layer 11 and the width dimension of the buffering layer 13 is defined, so that each surface of the metal layer 12 will not be exposed to the outside and each surface of the metal layer 12 will not be corroded.

When the second fiber-resin composite layer 14 is not present, optionally, the length dimension of the first fiber-resin composite layer 11 is equal to the length dimension of the buffering layer 13, and the width dimension of the first fiber-resin composite layer 11 is equal to the width dimension of the buffering layer 13. In this case, a portion of the first fiber-resin composite layer 11 will be laminated with the metal layer 12, and the other portion of the first fiber-resin composite layer 11 will be laminated with the buffering layer 13.

When the second fiber-resin composite layer 14 is present, the length dimension of the first fiber-resin composite layer 11 is greater than the length dimension of the buffering layer 13, the width dimension of the first fiber-resin composite layer 11 is greater than the width dimension of the buffering layer 13, the length dimension of the first fiber-resin composite layer 11 is equal to the length dimension of the second fiber-resin composite layer 14, and the width dimension of the first fiber-resin composite layer 11 is equal to the width dimension of the second fiber-resin composite layer 14. In this case, a portion of the first fiber-resin composite layer 11 will be laminated with the metal layer 12, and the other portion of the first fiber-resin composite layer 11 will be laminated with the second fiber-resin composite layer 14.

In an embodiment, the protective plate 1 has a length dimension of Lmm. In the length direction of the protective plate 1, a first distance exists between an edge of the metal layer 12 and an edge of the first fiber-resin composite layer 11, and the dimension of the first distance is L*(3% to 8%)mm.

A second distance exists between the edge of the metal layer 12 and an edge of the buffering layer 13, and the dimension of the second distance is L*(3% to 8%)mm.

The protective plate 1 has a width dimension of Wmm. In the width direction of the protective plate 1, a third distance exists between an edge of the metal layer 12 and an edge of the first fiber-resin composite layer 11, and the dimension of the third distance is W*(2% to 12%)mm.

A fourth distance exists between the edge of the metal layer 12 and an edge of the buffering layer 13, and the dimension of the fourth distance is W*(2% to 12%)mm.

In the embodiment, in the length direction of the protective plate 1, the metal layer 12 has a first edge and a second edge, and the first fiber-resin composite layer 11 has a third edge and a fourth edge. The first edge and the third edge are located at the same side, and the second edge and the fourth edge are located at the same side. A first distance exists between the first edge of the metal layer 12 and the third edge of the first fiber-resin composite layer 11, and the dimension of the first distance is L*(3% to 8%)mm. Alternatively, a first distance exists between the second edge of the metal layer 12 and the fourth edge of the first fiber-resin composite layer 11, and the dimension of the first distance is L*(3% to 8%)mm.

Similarly, in the length direction of the protective plate 1, the buffering layer 13 has a fifth edge and a sixth edge. The first edge and the fifth edge are located at the same side, and the second edge and the sixth edge are located at the same side. A second distance exists between the first edge and the fifth, and a second distance exists between the second edge and the sixth edge.

In the embodiment, the length dimension of the metal layer 12 is smaller than the length dimension of the first fiber-resin composite layer 11, and the length dimension of the metal layer 12 is smaller than the length dimension of the buffering layer 13. In this embodiment, a first distance is defined to exist between an edge of the metal layer 12 and an edge of the first fiber-resin composite layer 11, and the dimension of the first distance is L*(3% to 8%)mm. A second distance is defined to exist between the edge of the metal layer 12 and an edge of the buffering layer 13, and the dimension of the second distance is L*(3% to 8%)mm. In this way, the metal layer 12 is located between the first fiber-resin composite layer 11 and the buffering layer 13, to avoid the corrosion of the surface of the metal layer 12 arranged along the length direction of the protective plate 1. Furthermore, since the length dimension of the metal layer 12 is smaller than the length dimension of the first fiber-resin composite layer 11, and the length dimension of the metal layer 12 is smaller than the length dimension of the buffering layer 13, the metal layer 12 is not arranged in an edge region in the length direction of the protective plate 1. In this embodiment, by defining the first distance and the second distance within this range, the structural strength of the edge region of the protective plate 1 is enhanced.

In the embodiment, in the width direction of the protective plate 1, the metal layer 12 has a seventh edge and an eighth edge, and the first fiber-resin composite layer 11 has a ninth edge and a tenth edge. The seventh edge and the ninth edge are located at the same side, and the eighth edge and the tenth edge are located at the same side. A third distance exists between the seventh edge and the ninth edge, and a third edge exists between the eighth edge and the tenth edge.

Similarly, in the width direction of the protective plate 1, the buffering layer 13 has an eleventh edge and a twelfth edge. The seventh edge and the eleventh edge are located at the same side, and the eighth edge and the twelfth edge are located at the same side. A fourth distance exists between the seventh edge and the eleventh edge, and a fourth distance exists between the eighth edge and the twelfth edge.

In the embodiment, the width dimension of the metal lay er 12 is smaller than the width dimension of the first fiber-resin composite layer 11, and the width dimension of the metal layer 12 is smaller than the width dimension of the buffering layer 13. In this embodiment, a third distance is defined to exist between an edge of the metal layer 12 and an edge of the first fiber-resin composite layer 11, and the dimension of the third distance is W*(2% to 12%)mm. A fourth distance is defined to exist between the edge of the metal layer 12 and an edge of the buffering layer 13, and the dimension of the fourth distance is W*(2% to 12%)mm. In this way, the metal layer 12 is located between the first fiber-resin composite layer 11 and the buffering layer 13, to avoid the corrosion of the surface of the metal layer 12 arranged along the width direction of the protective plate 1. Moreover, the metal layer 12 is not arranged in an edge region in the width direction of the protective plate 1. In this embodiment, by defining the third distance and the fourth distance within this range, the structural strength of the edge region of the protective plate 1 is enhanced.

For example, the dimension of the first distance can be L*(3% to 5%)mm, or L*(5% to 8%)mm, the dimension of the second distance can be L*(3% to 5%)mm or L*(5% to 8%)mm; the dimension of the third distance can be W*(2% to 10%)mm, or W*(3% to 12%)mm; and the dimension of the fourth distance can be W*(2% to 10%)mm, or W*(3% to 12%)mm.

In an embodiment, the first fiber-resin composite layer 11 includes a fiber and a resin, where the fiber is at least one of a carbon fiber, a glass fiber and an aramid fiber, and the resin is at least one of an epoxy resin, a phenolic resin, a polypropylene resin, and a nylon resin.

In the embodiment, the type of the fiber and the type of the resin in the first fiber-resin composite layer 11 are defined to improve the structural strength of the protective plate 1. For example, the first fiber-resin composite layer 11 can be made of glass fiber and epoxy resin.

In an embodiment, the buffering layer 13 has a honeycomb structure 19, where a hole size of the honeycomb structure 19 ranges from 6 mm to 10 mm, and a hole wall dimension of the honeycomb structure 19 ranges from 0.3 mm to 0.8 mm; or the buffering layer 13 has a foam structure.

In this embodiment, the honeycomb structure 19 in the buffering layer is defined, particularly, the spatial size and the hole wall dimension of the honeycomb structure are defined, so that the buffering layer 13 can have a better buffering and energy absorption performance.

In addition, the buffering layer 13 can be made of aluminum, and a honeycomb structure is formed on the aluminum plate; or, the buffering layer 13 can be made of polypropylene, and a honeycomb structure is formed on the polypropylene board (PP board), to improve the impact resistance of the protective plate 1, and enhance the overall rigidity of the protective plate 1.

In an optional embodiment, the buffering layer 13 may have a foam structure, so that the buffering layer 13 has the function of buffering and absorbing energy.

In a second aspect of the present disclosure, a battery pack 2 is provided. The battery pack 2 includes a tray 21 and a protective plate according to the first aspect, where the protective plate 1 is mounted on the tray 21.

In the embodiment, a battery pack 2 is provided. The battery pack 2 includes the protective plate 1 of the present disclosure. The protective plate 1 is mounted on the tray 21 of the battery pack 2. The protective plate 1 serves to protect the battery module 2, so as to improve the safety performance of the battery pack 2. As shown in FIG. 1, the battery pack 2 includes a sealing cover 23, a battery core 22, the tray 21 and the protective plate 1. The sealing cover 23 and the tray 21 define a space accommodating the battery core 22. The protective plate 1 is arranged outside the tray 21 and the protective plate 1 is connected to the bottom of the tray 21.

In a third aspect of the present disclosure, a vehicle is provided, which includes the battery pack 2 according to the second aspect.

In the embodiment, a vehicle is provided, which includes the battery pack 2 and a load connected to the battery pack. The load includes, but is not limited to, a converter and an air-conditioner compressor etc. When the battery pack 2 is used in a vehicle, the safety of the battery pack 2 is ensured, and the safety during the running of the vehicle is thus improved.

In the above embodiments, the differences between the various embodiments are mainly described. Where not contradictory, the different optimal features of various embodiments can be combined to form a more preferred embodiment, which will not be detailed here, considering the brevity of description.

Although some specific embodiments of the present disclosure have been described in detail by way of examples, a person skilled in the art should understand that the foregoing examples are merely provided for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

## Claims

1. A protective plate (1) for a battery pack (2), the protective plate (1) comprising a first fiber-resin composite layer (11), a metal layer (12), and a buffering layer (13) laminated in sequence.

2. The protective plate (1) according to claim 1, the protective plate (1) further comprising a second fiber-resin composite layer (14), the second fiber-resin composite layer (14) being located at a side of the buffering layer (13) facing away from the metal layer (12).

3. The protective plate (1) according to claim 2, wherein a thickness of the first fiber-resin composite layer (11) arranges from 0.3 mm to 1.0 mm, a thickness of the metal layer (12) ranges from 0.6 mm to 1.2 mm, a thickness of the buffering layer (13) ranges from 6 mm to 12 mm, and a thickness of the second fiber-resin composite layer (14) ranges from 0.5 mm to 1.0 mm.

4. The protective plate (1) according to claim 1, wherein a thickness of the protective plate (1) ranges from 7 mm to 15 mm.

5. The protective plate (1) according to claim 1, wherein a first adhesive layer (15) is arranged between the first fiber-resin composite layer (11) and the metal layer (12), and a thickness of the first adhesive layer (15) ranges from 0.1 mm to 0.3 mm; and/or
a second adhesive layer (16) is arranged between the metal layer (12) and the buffering layer (13), and a thickness of the second adhesive layer (16) ranges from 0.1 mm to 0.3 mm.

6. The protective plate (1) according to claim 2, wherein a third adhesive layer is provided between the buffering layer (13) and the second fiber-resin composite layer (14), and a thickness of the third adhesive layer ranges from 0.1 mm to 0.3 mm.

7. The protective plate (1) according to claim 1, wherein the buffering layer (13) and the metal layer (12) are connected by a molten component, a connecting hole (20) is defined in the metal layer (12), one end of the molten component being located in the connecting hole (20) and connected to an inner wall of the connecting hole (20), and the other end of the molten component being connected to the buffering layer (13); or
a recess (17) is arranged at a side of the buffering layer (13) and facing the metal layer (12), and the metal layer (12) is located in the recess (17).

8. The protective plate (1) according to claim 1, wherein the metal layer (12) has a first dimension in a length direction of the protective plate (1), the first fiber-resin composite layer (11) has a second dimension in the length direction of the protective plate (1), the buffering layer (13) has a third dimension in the length direction of the protective plate (1), the first dimension being smaller than the second dimension, and the first dimension being smaller than the third dimension; and/or
the metal layer (12) has a fourth dimension in a width direction of the protective plate (1), the first fiber-resin composite layer (11) has a fifth dimension in the width direction of the protective plate (1), the buffering layer (13) has a sixth dimension in the width direction of the protective plate (1), the fourth dimension being smaller than the fifth dimension, and the fourth dimension being smaller than the sixth dimension.

9. The protective plate (1) according to claim 8, wherein the second dimension is greater than or equal to the third dimension; and/or the fifth dimension is greater than or equal to the sixth dimension.

10. The protective plate (1) according to claim 8 or 9, the protective plate (1) further comprising a second fiber-resin composite layer (14), the second fiber-resin composite layer (14) being arranged at a side of the buffering layer (13) facing away from the metal layer (12), the second fiber-resin composite layer (14) having a seventh dimension in the length direction of the protective plate (1), and the seventh dimension being equal to the second dimension; and/or the second fiber-resin composite layer (14) having an eighth dimension in the width direction of the protective plate (1), and the fifth dimension being equal to the eighth dimension.

11. The protective plate (1) according to claim 1, wherein the protective plate (1) has a length dimension of Lmm, in the length direction of the protective plate (1), a first distance is provided between an edge of the metal layer (12) and an edge of the first fiber-resin composite layer (11), and a dimension of the first distance is L*(3% to 8%)mm; and a second distance is provided between the edge of the metal layer (12) and an edge of the buffering layer (13), and a dimension of the second distance is L*(3% to 8%)mm; and/or
the protective plate (1) has a width dimension of Wmm, in the width direction of the protective plate (1), a third distance is provided between an edge of the metal layer (12) and an edge of the first fiber-resin composite layer (11), and a dimension of the third distance is W*(2% to 12%)mm; and a fourth distance is provided between the edge of the metal layer (12) and an edge of the buffering layer (13), and a dimension of the fourth distance is W*(2% to 12%)mm.

12. The protective plate (1) according to claim 1, wherein the first fiber-resin composite layer (11) comprises a fiber and a resin, the fiber being at least one of a carbon fiber, a glass fiber, and an aramid fiber, and the resin being at least one of an epoxy resin, a phenolic resin, a polypropylene resin, and a nylon resin.

13. The protective plate (1) according to claim 1, wherein the buffering layer (13) has a honeycomb structure (19), a hole size of the honeycomb structure (19) ranges from 6 mm to 10 mm, and a hole wall dimension of the honeycomb structure (19) ranges from 0.3 mm to 0.8 mm; or the buffering layer (13) has a foam structure.

14. A battery pack (2), the battery pack (2) comprising a tray (21) and a protective plate (1) according to any one of claims 1 to 13, the protective plate (1) being mounted on the tray (21).

15. A vehicle, the vehicle comprising a battery pack (2) according to claim 14 and a load being connected to the battery pack (2).
